# EUROPÄISCHE PATENTSCHRIFT

(11) **EP 4 200 054 B1**
(45) Veröffentlichungstag und Bekanntmachung des Hinweises auf die Patenterteilung: **08.07.2026**
(21) Anmeldenummer: 21765870.7
(22) Anmeldetag: 17.08.2021
(51) Int. Cl.: B01D 46/00, B01D 46/10, B01D 46/52, F02M 35/024

(54) **FILTERELEMENT UND FILTERSYSTEM**
FILTER ELEMENT AND FILTER SYSTEM
ÉLÉMENT FILTRANT ET SYSTÈME DE FILTRAGE

(30) Priorität: 19.08.2020 DE 102020121711
(43) Veröffentlichungstag der Anmeldung: 28.06.2023
(73) Patentinhaber: MANN+HUMMEL GmbH, 71636 Ludwigsburg (DE)
(72) Erfinder: JOOS, Bernd, 73547 Lorch (DE)
(74) Vertreter: Mann + Hummel Intellectual Property
(86) Internationale Anmeldenummer: PCT/EP2021/072843
(87) Internationale Veröffentlichungsnummer: WO 2022/038142

(56) Entgegenhaltungen:
- DE-A1- 102004 036 083
- DE-A1- 102017 011 876
- DE-A1- 102017 211 090
- DE-B3- 102008 036 913
- JP-A- 2008 232 111

## Beschreibung

### Technisches Gebiet

Die Erfindung betrifft ein Filterelement zum Filtern eines Fluids, insbesondere zur Verwendung für Kassettenluftfilter einer Brennkraftmaschine oder als Innenraumluftfilter, insbesondere eines Kraftfahrzeugs sowie ein Filtersystem mit einem Filterelement.

### Stand der Technik

In der Praxis werden Partikelfilter zum Herausfiltern von in gasförmigen Fluiden, beispielsweise Luft, enthaltenen partikulären Verunreinigungen eingesetzt. Die Partikelfilter weisen ein Filtergehäuse mit einem Einlass für das zu filternde Fluid und mit einem Auslass für das gefilterte Fluid auf. Das Filtergehäuse weist nach einer Bauart eine Einschuböffnung für ein Filterelement auf, um dieses in einem Einschubfach im Inneren des Filtergehäuses zu positionieren. Das im Einschubfach angeordnete Filterelement kann dadurch im Filterbetrieb von dem zu filternden Fluid entlang einer Hauptströmungsachse, vorzugsweise von unten nach oben, durchströmt werden. Eine Dichtungseinrichtung des Filterelements ermöglicht den erforderlichen Dichtsitz des Filterelements im Filtergehäuse, so dass im Filterbetrieb einer unerwünschten Leck- oder Bypasströmung des zu filternden gasförmigen Fluids um das Filterelement herum entgegengewirkt wird.

In der DE 10 2008 036 913 B3 wird ein Luftfiltersystem mit einem flachen, plattenartigen Filterelement beschrieben, das möglichst kompakt baut und das dennoch Maßnahmen vorsieht, um einem Zusetzen des Filterelements mit Schnee und/oder Eis entgegenzuwirken. Ein solches Luftfiltersystem sieht einen Rahmen vor, in den ein plattenartig ausgebildetes Filterelement einsetzbar ist, welches eine Rohluftseite, eine im Wesentlichen parallel dazu angeordnete Reinluftseite und im Wesentlichen senkrecht dazu verlaufende Schmalseiten aufweist, und mit einem Gehäuse, in welches der Rahmen samt Filterelement einführbar ist. Für den Fall, dass das Filterelement eine rechteckige Grundfläche vorsieht, sind insgesamt vier Schmalseiten vorhanden, zwei parallel zueinander verlaufende Längsschmalseiten und zwei, zu den Längsschmalseiten jeweils senkrecht verlaufende Querschmalseiten. Ferner ist ein Bypassventil vorgesehen, über das im geöffneten Zustand Warmluft in den zwischen dem Gehäuse oder dem Rahmen und wenigstens einer Schmalseite liegenden Bereich derart gelangt, dass die Warmluft von dort durch die Schmalseite in das Filterelement einströmt und durch die Reinluftseite aus dem Filterelement ausströmt.

In der DE 10 2017 011 876 A1 ist ein Luftfilter mit Schneeschutz offenbart, wobei das Gehäuse eine Hauptkammer und eine Nebenkammer aufweist, in welches ein Filterelement mit zwei getrennten Filtermediumkörpern einsetzbar ist. Eine Dichtkontur zwischen den Filtermediumkörpern folgt der Kontur einer geschwungenen Trennwand der beiden Kammern.

Ein weiterer Luftfilter mit Schneeschutz ist in der JP 2008 232 111 A beschrieben. Ein Nebenfilterelement teilt den Anströmbereich in einen Hauptstrombereich und einen Nebenstrombereich, wobei der Nebenstrombereich mit einem zweiten Einlass kommuniziert.

Die DE 10 2004 036 083 A1 offenbart eine Ansaugvorrichtung mit einem Luftfilterelement mit wenigstens zwei Filterteilbereichen mit unterschiedlichem Strömungswiderstand.

Die in der DE 10 2017 211 090 A1 beschriebene Ansaugvorrichtung weist ein Filterelement mit einem gefalteten Filterkörper auf, der einen umlaufenden Dichtungsring und einen Dichtungssteg, der sich parallel zu den Falzen des Filterkörpers erstreckt, aufweist.

### Offenbarung der Erfindung

Eine Aufgabe der Erfindung ist es, ein verbessertes Filterelement zum Filtern eines Fluids zu schaffen, das einem Zusetzen des Filterelements mit Schwebeteilchen aus dem Fluid entgegenwirkt.

Eine weitere Aufgabe ist es, ein Filtersystem zum Filtern eines Fluids zur Aufnahme eines solchen austauschbaren Filterelements zu schaffen.

Die vorgenannten Aufgaben werden nach einem Aspekt der Erfindung gelöst von einem Filterelement für ein Filtersystem nach Anspruch 1.

Günstige Ausgestaltungen und Vorteile der Erfindung ergeben sich aus den weiteren Ansprüchen, der Beschreibung und der Zeichnung.

Es wird ein Filterelement zum Filtern eines Fluids vorgeschlagen, mit wenigstens einem Filterbalg, mit einer ersten flächigen Anströmfläche für einen ersten Fluidstrom, sowie wenigstens einer zweiten Anströmfläche für einen zweiten Fluidstrom separat vom ersten Fluidstrom, wobei die zweite Anströmfläche von der ersten Anströmfläche getrennt ist. Dabei ist in einem Strömungskanalabschnitt des zweiten Fluidstroms rohseitig wenigstens ein Kompensationselement angeordnet.

Die Trennung zwischen erster und zweiter Anströmfläche ist vorteilhafterweise fluiddicht ausgebildet, insbesondere wenigstens ausreichend fluiddicht ausgebildet. Dabei bedeutet ausreichend fluiddicht, dass die Trennung unter normalen Betriebsbedingungen so fluiddicht ausgebildet ist, dass die Funktion des Filterelements praktisch nicht gestört wird. "Normale Betriebsbedingungen" bedeutet, dass der zuströmende Fluidstrom, insbesondere der zuströmende Luftstrom, unter normalem Atmosphärendruck steht und nicht mit Überdruck eingeblasen wird. Eine Leckage ist dann tolerierbar, wenn die Funktion des Filterelements praktisch ungestört bleibt, d.h. die Leckage keine größeren Partikel passieren lässt als das Medium des Filterelementes.

Der Filterbalg kann insbesondere einstückig ausgebildet sein, sodass die beiden Anströmflächen in einem einzigen Filterbalg aus einem Filtermedium ausgebildet sind. Alternativ ist jedoch auch möglich, dass die beiden Anströmflächen in zwei verschiedenen Filterbälgen mit gleichen oder mit unterschiedlichen Filtermedien realisiert sind, welche aneinander anschließend in dem Filterelement angeordnet sein können.

Günstigerweise kann mit dem Filterelement ein Filtersystem bereitgestellt werden, das eine günstige Variantenbildung mit oder ohne Schwebeteilchenventil erlaubt. Es können hierdurch Bauteile entfallen, so dass keine zusätzlichen Spritzgusswerkzeuge notwendig sind, wenn bei der Herstellung des Filtersystems Spritzguss eingesetzt wird.

Das Kompensationselement ist vom Fluid durchströmbar ausgebildet. Fluid kann hindurchtreten, während Schwebeteilchen im Fluid, wie beispielsweise Schnee, Wasser oder dergleichen, zurückgehalten werden können. Dadurch steht für die eigentliche Filtrationsaufgabe des Filterelements eine größere Filterfläche zur Verfügung, da der Filterbalg sich nicht mit Schwebeteilchen aus dem Fluid zusetzt.

Das Kompensationselement gleicht Toleranzen im Filterelement aus und kann gegebenenfalls an der Rohseite des Filterelements Schwebeteilchen von der zweiten Anströmfläche zurückhalten.

Die Durchströmungsrichtung ist bei einem flachen Filter beispielsweise senkrecht zur Anströmfläche und Abströmfläche gerichtet. Vorzugsweise bilden die Abströmfläche und die Anströmfläche bei einem Filter mit aufgestellten Falten die Flächen, in denen jeweils die Faltkanten liegen.

Bei dem erfindungsgemäßen Filterelement, welches beispielsweise als ein kunststoffumspritztes Filterelement (KUF-Element) ausgebildet sein kann, ist außer dem Hauptfiltrationsbereich mit einer ersten Anströmfläche des Filterbalgs ein weiterer Filtrationsbereich mit einer zweiten Anströmfläche vorhanden, welche zur Anbindung einer weiteren Ansaugstelle eines Fluids, beispielsweise Luft, dient. Die Anbindung der weiteren Ansaugstelle kann stirnseitig und/oder über ein Randsegment eines abgetrennten Bereiches am kunststoffumspritzten Filterelement mit einer teilweisen Umlenkung des zweiten Fluidstroms erfolgen. Das Randsegment ist hierbei ein Flächenelement im Filterbalg nahe des Umfangs oder angrenzend an den Umfang des Filterbalgs. Beispielsweise können die erste und die zweite Anströmfläche zueinander parallel sein.

Der abgetrennte weitere Filtrationsbereich am KUF-Element kann sich dabei am Rand oder auch innerhalb des Filterelementes befinden. Es können auch mehrere weitere Filtrationsbereiche mit weiteren Anströmflächen vorgesehen sein. Diese können für gleiche oder für unterschiedliche Anschlussrichtungen ausgebildet sein.

Eine solche Ausführung des Filterelements weist wesentliche Vorteile gegenüber dem Stand der Technik auf, der beispielsweise Schneeventillösungen mit Filterelementen aus Papier beschreibt, bei denen am Filterelement auf der Rohluftseite ein Vlies angebracht sein kann, das direkt einen weiteren Anströmkanal abdichtet. Das erfindungsgemäße Filterelement weist eine separate Anströmfläche auf. Diese ist separat mit einem vom Fluid durchströmbaren Kompensationselement versehen. Das Filtermedium des Kompensationselements kann z.B. ein Vlies sein. Über die zweite Anströmfläche des weiteren Filtrationsbereichs kann ein separater zweiter Fluidstrom, der beispielsweise auch angewärmt sein kann, zugeführt werden. Auf diese Weise ist es möglich, mit einem kunststoffumspritzten Filterelement unterschiedliche Luftströme zu filtern. Als Filterbalg kann beispielsweise ein zickzackgefalteter Filterbalg aus einem Vlies eingesetzt werden.

Der separate weitere Filtrationsbereich des Filterelements für die zweite Anströmfläche ist als eine gegenüber dem ersten Fluidstrom abgetrennte Kammer ausgebildet. Hierfür ist ein Trennelement vorgesehen. Eine Wand der Kammer kann so wirksam verhindern, dass eine Überströmung zum Hauptfiltrationsbereich mit der ersten Anströmfläche erfolgt. Die Kammer kann in einem abgestuften Faltenbereich des eigentlichen Filterbalgs durch eine Rippe als Trennelement abgetrennt realisiert sein.

Gegebenenfalls kann es von Vorteil sein, wenigstens zwei verschiedene Filterbälge mit unterschiedlichen Filtermedien für die beiden Anströmflächen zu verwenden, so dass jeder Filterbalg eine Anströmfläche aufweist, welche dann durch das Trennelement voneinander getrennt sind. So ist es beispielsweise möglich, dass der Filterbalg der ersten Anströmfläche als Faltenfilter und der Filterbalg der zweiten Anströmfläche als Vlieslage ausgebildet sind. Der Faltenfilter weist eine signifikant höhere Filtrationsfläche auf als die Vlieslage, wodurch der funktionalen Unterteilung in einen Hauptfiltrationsbereich für den Normalbetrieb für die reguläre Durchströmung, wenn der erste Anströmbereich frei durchgängig ist und in einen Nebenfiltrationsbereich für die Durchströmung in Notfällen, wenn der erste Anströmbereich zugesetzt ist, Rechnung getragen wird.

Der zweite Zustrom kann mit erwärmter Luft erfolgen. Das Filterelement kann in einem Notlaufbetrieb über den zweiten Zustrom betrieben werden, wenn der erste Zustrom durch Schwebeteilchen im Fluid, beispielsweise durch Schnee, zugesetzt ist. Das Kompensationselement kann dann eine zusätzliche Filterfunktion übernehmen.

Das durchströmbare Kompensationselement, das als Vlies, aber beispielsweise auch als Elastomer ausgebildet sein kann, sorgt bei der Montage des Filterelements auf Grund seiner Elastizität für einen Toleranzausgleich. Das Kompensationselement kann beispielsweise über Kleberaupen am eigentlichen Filterbalg oder einem Rahmen des Filterbalgs befestigt sein.

Das Filterelement kann vorteilhaft als Schubladenfilterelement für einen seitlichen Einschub in ein Filtergehäuse ausgebildet sein. Jedoch ist auch möglich, dass das Filterelement in ein geöffnetes Filtergehäuse von oben eingesetzt wird und dann das Filtergehäuse mit einem Gehäusedeckel verschlossen wird.

Das Kompensationselement kann auch zusammen mit der Umspritzung des Filterbalgs zur Bildung eines Rahmens mit eingespritzt werden, um so einen Toleranzausgleich und/oder eine effiziente Abdeckung auch der zweiten Anströmfläche zu erzielen.

Erfindungsgemäß ist im Filterbalg wenigstens ein Trennelement zwischen erster und zweiter Anströmfläche angeordnet. Auf diese Weise kann wirksam verhindert werden, dass ein erster Fluidstrom, der eigentlich nur an die erste Anströmfläche gelangen soll, an die zweite Anströmfläche gelangt und so die zweite Anströmfläche möglicherweise mit Schwebeteilchen aus dem Fluid zusetzen könnte. Der Fluidstrom für die zweite Anströmfläche wiederum kann bevorzugt durch diesen Teil des Filterbalgs strömen, der dadurch frei von Zusetzungen, beispielsweise durch Schnee, ist.

Gemäß einer vorteilhaften Ausgestaltung kann das Kompensationselement in oder an einem Randsegment am Rand des Filterelements angeordnet sein. Die Anbindung der weiteren Ansaugstelle kann so über das Randsegment eines abgetrennten Bereiches am kunststoffumspritzten Filterelement mit einer teilweisen Umlenkung des zweiten Fluidstroms erfolgen und kann so bauraumtechnisch günstig untergebracht werden.

Gemäß einer vorteilhaften Ausgestaltung kann das Kompensationselement in oder an einer Stirnfläche des Filterelements angeordnet sein. Die Anbindung der weiteren Ansaugstelle kann so über die Stirnfläche eines abgetrennten Bereiches am kunststoffumspritzten Filterelement mit oder ohne eine teilweise Umlenkung des zweiten Fluidstroms erfolgen und kann so bauraumtechnisch günstig untergebracht werden.

Gemäß einer vorteilhaften Ausgestaltung kann das Trennelement mit einem Deckelelement zur flächigen Abdeckung der zweiten Anströmfläche gegen den ersten Fluidstrom fluiddicht, vorzugsweise zumindest unter normalen Betriebsbedingungen ausreichend fluiddicht, verbunden sein. Dabei können das Trennelement, das Deckelelement, das Kompensationselement und der Rahmen als eine Kammer ausgebildet sein. Das Deckelelement kann beispielsweise aus Kunststoff gebildet sein. Der separate weitere Filtrationsbereich des Filterelements für die zweite Anströmfläche kann als eine gegenüber dem ersten Fluidstrom abgetrennte Kammer ausgebildet sein. In einer optionalen Ausgestaltung ist kein separates Deckelelement vorgesehen, wobei Trennelement, Kompensationselement und Rahmen die Kammer bilden. Eine Wand der Kammer kann so wirksam verhindern, dass eine Überströmung zum Hauptfiltrationsbereich mit der ersten Anströmfläche erfolgt. Die Kammer kann in einem abgestuften Faltenbereich des eigentlichen Filterbalgs beispielsweise durch eine Rippe abgetrennt realisiert sein.

Gemäß einer vorteilhaften Ausgestaltung kann der wenigstens eine Filterbalg zickzackförmig zu Falten gefaltet sein, mit parallelen, in einer Längserstreckung des Filterbalgs aufeinander folgenden Faltkanten, die sich jeweils zwischen gegenüberliegenden Stirnkanten des Filterbalgs erstrecken. Dabei kann der wenigstens eine Filterbalg umlaufend mit einem durchgehenden Rahmen umspritzt sein. Werden in dem Filterelement zwei unterschiedliche Filterbälge für die zwei Anströmbereiche angeordnet, können auch beide Filterbälge zusammen umlaufend mit einem durchgehenden Rahmen umspritzt sein. Ein solches Filterelement ist vorteilhaft als Luftfilter, beispielsweise einer Brennkraftmaschine, einzusetzen und stellt eine kostengünstige und effiziente Lösung eines Luftfilters dar. Durch den angespritzten Rahmen lässt sich das Filterelement einfach montieren und im Bedarfsfall auch austauschen.

Gemäß einer vorteilhaften Ausgestaltung kann das Trennelement parallel zu den Falten des Filterbalgs angeordnet sein. Die parallele Anordnung des Trennelements zu den Falten stellt eine fluidtechnisch günstige Lösung dar. Optional kann das Trennelement auch mit einer Neigung schräg gegenüber den Falten angeordnet sein.

Gemäß einer vorteilhaften Ausgestaltung kann das Kompensationselement mit dem Filterbalg und/oder dem Rahmen verbunden sein. Auf diese Weise lässt sich eine effektive Abdeckung der zweiten Anströmfläche über das Kompensationselement erreichen, so dass der zweite Fluidstrom zwangsläufig durch das Kompensationselement strömt. Auch kann das Kompensationselement bei der Montage nicht unabsichtlich abgestreift werden.

Gemäß einer vorteilhaften Ausgestaltung kann das Kompensationselement aus einem Vlies gebildet sein. Ein Vlies stellt eine kostengünstige und leicht zu montierende Lösung für das Kompensationselement dar. Durch die Elastizität des Kompensationselements kann vorteilhaft bei der Montage des Filterelements ein Toleranzausgleich erreicht werden. Ist das Kompensationselement durchströmbar ausgebildet, kann es auch eine Filtration des Fluids bewirken. Eine weitere günstige Alternative stellt ein Elastomer als Kompensationselement dar, das durch seine Elastizität vorteilhaft bei der Montage des Filterelements einen Toleranzausgleich bewirken kann.

Gemäß einer vorteilhaften Ausgestaltung kann der Filterbalg eine Anströmseite und eine gegenüberliegende Abströmseite aufweisen, die im Bereich des weiteren Filtrationsbereichs mit der zweiten Anströmfläche einen gegenüber der ersten Anströmfläche unterschiedlichen Abstand voneinander aufweisen, insbesondere einen geringeren Abstand aufweisen. Durch die unterschiedliche Dicke des Filterbalgs zwischen dem Hauptfiltrationsbereich im Bereich der ersten Anströmfläche und dem weiteren Filtrationsbereich im Bereich der zweiten Anströmfläche lässt sich der zweite Fluidstrom günstig über eine Kammer als Fluidkanalabschnitt an die zweite Anströmfläche heranführen. Auch lässt sich so ein Ventil, beispielsweise als Rückschlagventil ausgeführt, bauraumtechnisch günstig im Bereich des Filterbalgs unterbringen, sodass Bauraumprobleme auf diese Weise vorteilhaft reduziert werden können.

Gemäß einer vorteilhaften Ausgestaltung kann der Rahmen mit Filterbalg als Schubladenfilterelement ausgebildet sein. Ein Schubladenfilterelement stellt eine montagegerechte Lösung für die Integration des Filterelements in ein Filtersystem dar, das sich im Wartungsfall auch leicht tauschen lässt. Das Schubladenfilterelement kann quer zur Durchströmungsrichtung in ein Filtergehäuse eingeführt werden. Alternativ ist jedoch auch möglich, das Filterelement von oben in ein Gehäuseunterteil einzusetzen, das anschließend mit einem Gehäusedeckel verschlossen werden kann.

Nach einem weiteren Aspekt betrifft die Erfindung ein Filtersystem zum Filtern eines Fluids mit einem Filtergehäuse und einem in dem Filtergehäuse zwischen einer Rohseite und einer Reinseite austauschbar angeordneten Filterelement zum Filtern eines Fluids, mit wenigstens einem Filterbalg, mit einer ersten flächigen Anströmfläche für einen ersten Fluidstrom, sowie wenigstens einer zweiten Anströmfläche für einen zweiten Fluidstrom, wobei die zweite Anströmfläche von der ersten Anströmfläche ausreichend fluiddicht getrennt ist. Dabei ist rohseitig wenigstens ein Kompensationselement zum Ausgleich von Toleranzen im Filterelement angeordnet, durch welches ein Strömungskanal des zweiten Fluidstroms von einem rohseitigen Eingang zur zweiten Anströmfläche geführt ist. Das Filtergehäuse weist einen ersten Einlass zum Einströmen des ersten Fluidstroms an die erste Anströmfläche und wenigstens einen zweiten Einlass zum Einströmen des zweiten Fluidstroms an die wenigstens zweite Anströmfläche auf.

Bei dem Filterelement des erfindungsgemäßen Filtersystems, welches beispielsweise mit einem kunststoffumspritzten Filterelement (KUF-Element) ausgestattet sein kann, ist außer dem Hauptfiltrationsbereich mit einer ersten Anströmfläche des Filterbalgs ein weiterer Filtrationsbereich mit einer zweiten Anströmfläche vorhanden, welche zur Anbindung einer weiteren Ansaugstelle eines Fluids, beispielsweise Luft, dient. Die Anbindung der weiteren Ansaugstelle kann stirnseitig und/oder über ein Randsegment eines abgetrennten Bereiches am kunststoffumspritzten Filterelement mit einer teilweisen Umlenkung des zweiten Fluidstroms erfolgen.

Der Filterbalg kann insbesondere einstückig ausgebildet sein, sodass die beiden Anströmflächen in einem einzigen Filterbalg aus einem Filtermedium ausgebildet sind. Alternativ ist jedoch auch möglich, dass die beiden Anströmflächen in zwei verschiedenen Filterbälgen mit gleichen oder mit unterschiedlichen Filtermedien realisiert sind, welche aneinander anschließend in dem Filterelement angeordnet sein können.

Der abgetrennte weitere Filtrationsbereich am KUF-Element kann sich dabei am Rand oder auch innerhalb des Filterelementes befinden. Es können auch mehrere Filtrationsbereiche für unterschiedliche Anschlussrichtungen ausgebildet sein.

Eine solche Ausführung des Filterelements weist wesentliche Vorteile gegenüber dem Stand der Technik auf, der beispielsweise Schneeventillösungen mit Filterelementen aus Papier beschreibt, bei denen am Filterelement auf der Rohluftseite ein Vlies angebracht sein kann, das direkt einen weiteren Anströmkanal abdichtet. Das erfindungsgemäße Filterelement weist eine separate Anströmfläche auf, welche separat mit einem Kompensationselement, wie einem Vlies, einem Elastomer oder dergleichen, versehen sein kann, über welche ein separater zweiter Fluidstrom, der beispielsweise auch angewärmt sein kann, zugeführt werden kann. Auf diese Weise ist es möglich, mit einem kunststoffumspritzten Filterelement unterschiedliche Luftströme zu filtern. Als Filterbalg kann beispielsweise ein zickzackgefalteter Filterbalg aus einem Vlies eingesetzt werden.

Gemäß einer vorteilhaften Ausgestaltung kann der Strömungskanal von dem rohseitigen Einlass zu der zweiten Anströmfläche über wenigstens einen Teil einer Filterelement-Stirnfläche geführt sein. Die Anbindung der weiteren Ansaugstelle kann so über die Stirnfläche eines abgetrennten Bereiches am kunststoffumspritzten Filterelement mit oder ohne eine teilweise Umlenkung des zweiten Fluidstroms erfolgen und kann so bauraumtechnisch günstig untergebracht werden.

Gemäß einer vorteilhaften Ausgestaltung kann der Strömungskanal von dem rohseitigen Einlass zu der zweiten Anströmfläche durch wenigstens einen Teil eines Filterelement-Randsegments geführt sein. Die Anbindung der weiteren Ansaugstelle kann so über das Randsegment eines abgetrennten Bereiches am kunststoffumspritzten Filterelement mit einer teilweisen Umlenkung des zweiten Fluidstroms erfolgen und kann so bauraumtechnisch günstig untergebracht werden.

Gemäß einer vorteilhaften Ausgestaltung können Trennelement, Deckelelement, Kompensationselement und Rahmen als eine Kammer ausgebildet sein. Der separate Bereich des Filterelements für die zweite Anströmfläche kann so als eine gegenüber dem ersten Fluidstrom abgetrennte Kammer ausgebildet sein. In einer optionalen Ausgestaltung ist kein separates Deckelelement vorgesehen, wobei Trennelement, Kompensationselement und Rahmen die Kammer bilden. Eine Wand der Kammer kann dadurch wirksam verhindern, dass eine Überströmung zum Hauptfiltrationsbereich mit der ersten Anströmfläche erfolgt. Die Kammer kann in einem abgestuften Faltenbereich des eigentlichen Filterbalgs durch eine Rippe abgetrennt realisiert sein.

Gemäß einer vorteilhaften Ausgestaltung kann in einem Gehäuseteil, beispielsweise einem Gehäuseunterteil, eine Strömungskammer mit einem Ventil, beispielsweise als Rückschlagventil ausgeführt, für den zweiten Fluidstrom ausgebildet sein. Auf diese Weise kann wirksam verhindert werden, dass im Normalbetrieb der erste Fluidstrom über die zweite Anströmfläche einströmt, sondern nur, wenn die erste Anströmfläche zugesetzt ist. Damit kann eine sichere Funktion des Filtersystems im Normalbetrieb mit möglichst effektiver Filterung im Bereich der ersten Anströmfläche erreicht werden.

Gemäß einer vorteilhaften Ausgestaltung kann an dem zweiten Einlass ein Ventil angeordnet sein. Aus bauraumtechnischen Gründen lässt sich das Ventil günstig mit dem zweiten Einlass kombinieren, wodurch ein möglichst kompaktes Filtersystem dargestellt werden kann. Außerdem kann so eine sichere Funktion des Filtersystems im Normalbetrieb mit möglichst effektiver Filterung im Bereich der ersten Anströmfläche erreicht werden.

Gemäß einer vorteilhaften Ausgestaltung kann ein Zustrom des Fluids über das Ventil druckgesteuert ausgebildet sein oder durch einen Strömungswiderstand gesteuert ausgebildet sein. Dadurch lässt sich vorteilhaft erreichen, dass ein zweiter Fluidstrom nur bei zugesetzter erster Anströmfläche in den Strömungskanal der zweiten Anströmfläche eintritt, da dadurch ein entsprechender Unterdruck sich im Filtersystem aufbaut. Der Bereich der zweiten Anströmfläche im Filterelement wird so nur im Notbetrieb beansprucht, während im Normalbetrieb ein erster Fluidstrom nur über die erste Anströmfläche strömt.

Gemäß einer vorteilhaften Ausgestaltung kann das Filterelement als Schubladenfilterelement ausgebildet sein, das quer zur Hauptströmungsachse des Fluids in das Filtergehäuse eingeführt oder einführbar ist. Vorteilhaft kann der Filterbalg als Flachfilterbalg ausgebildet sein. Der Balg eines Flachfilters stellt eine günstige Bauform für einen Luftfilter dar und lässt sich insbesondere als Schubladenfilter vorteilhaft verwenden, wodurch sich günstige Bauraumverhältnisse ergeben.

Gemäß einer vorteilhaften Ausgestaltung kann das Filtergehäuse ein Einschubfach mit einer Rahmenführung für das Filterelement aufweisen, mittels derer das Filterelement über eine Einschuböffnung des Filtergehäuses in das Einschubfach einschiebbar ist, so dass eine Dichtung des Filterelements an einer Gehäusedichtfläche umlaufend dichtend anliegt. Ein Schubladenfilterelement stellt eine montagegerechte Lösung für die Integration des Filterelements in ein Filtersystem dar, das sich im Wartungsfall auch leicht tauschen lässt. Alternativ ist jedoch auch möglich, das Filterelement beispielsweise in ein Gehäuseunterteil eines Filtergehäuses von oben einzusetzen, das anschließend mit einem Gehäusedeckel verschlossen werden kann.

Das beschriebene Filtersystem kann vorteilhaft als Luftfilter, insbesondere als Luftfilter einer Brennkraftmaschine oder als Innenraumluftfilter, insbesondere eines Kraftfahrzeugs eingesetzt werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine geschnittene isometrische Darstellung eines Filtersystems mit montiertem Schubladenfilterelement nach einem Ausführungsbeispiel der Erfindung mit einer Anströmung über eines Randsegments des Filterelements;
- Fig. 2: eine Detailansicht des Filtersystems nach Figur 1 im Bereich der zweiten Anströmfläche;
- Fig. 3: eine isometrische Darstellung des Gehäuseunterteils des Filtersystems nach Figur 1;
- Fig. 4: eine isometrische Darstellung des Filterelements aus dem Filtersystem nach Figur 1;
- Fig. 5: eine geschnittene isometrische Darstellung des Filterelements aus dem Filtersystem nach Figur 1;
- Fig. 6: eine geschnittene isometrische Darstellung eines Filtersystems mit montiertem Schubladenfilterelement nach einem Ausführungsbeispiel der Erfindung mit einer Anströmung über eine Stirnfläche des Filterelements;
- Fig. 7: eine Detailansicht des Filtersystems nach Figur 6 im Bereich der zweiten Anströmfläche;
- Fig. 8: eine isometrische Darstellung des Gehäuseunterteils des Filtersystems nach Figur 6;
- Fig. 9: eine isometrische Darstellung des Filterelements aus dem Filtersystem nach Figur 6; und
- Fig. 10: eine geschnittene isometrische Darstellung des Filterelements aus dem Filtersystem nach Figur 6.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

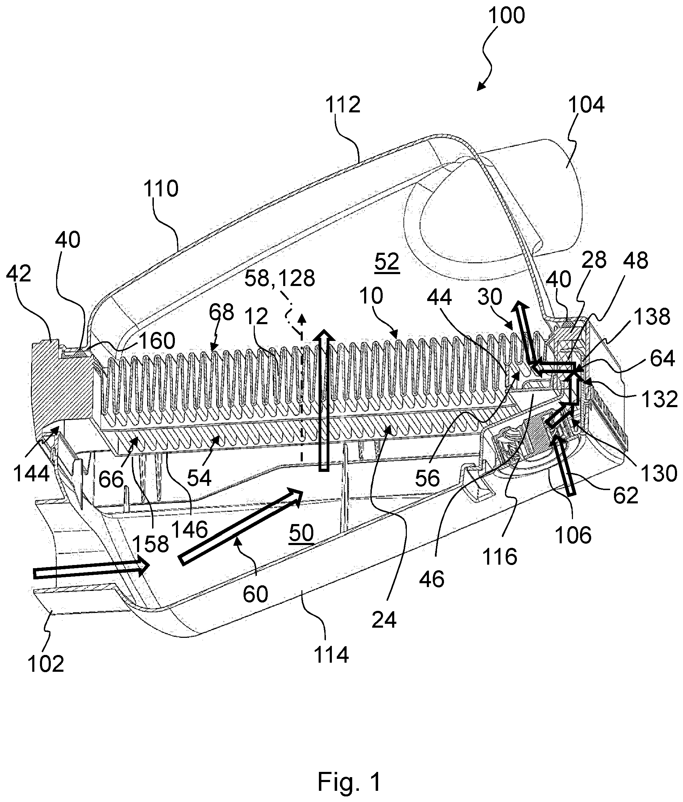

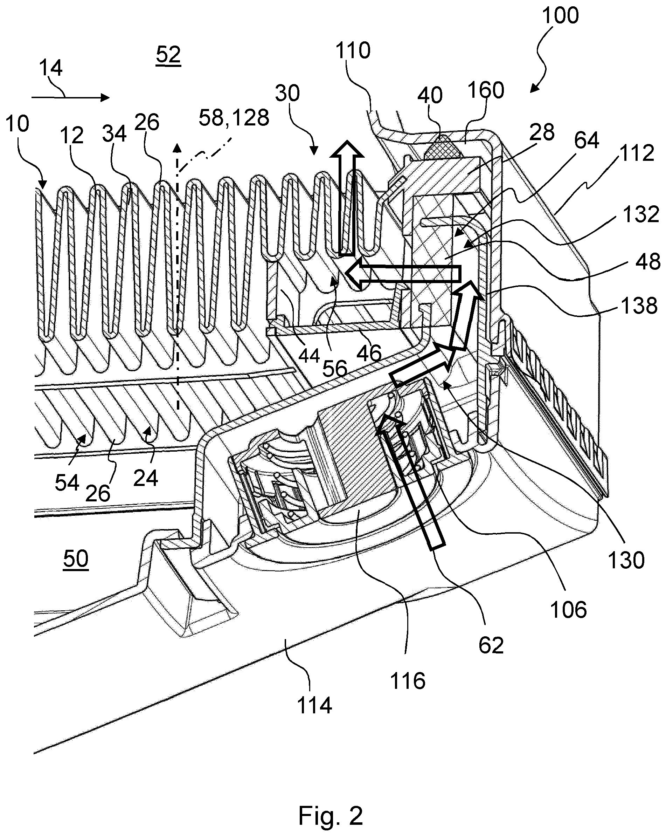

Figur 1 zeigt eine geschnittene isometrische Darstellung eines Filtersystems 100 mit montiertem Schubladenfilterelement 10 nach einem Ausführungsbeispiel der Erfindung mit einer Anströmung über ein Randsegment 30 des Filterelements 10, während in Figur 2 eine Detailansicht des Filtersystems 100 nach Figur 1 im Bereich der zweiten Anströmfläche 56 dargestellt ist. Das Randsegment 30 kann sowohl entlang einer Durchströmungsrichtung 58 als auch schräg dazu durchströmbar sein.

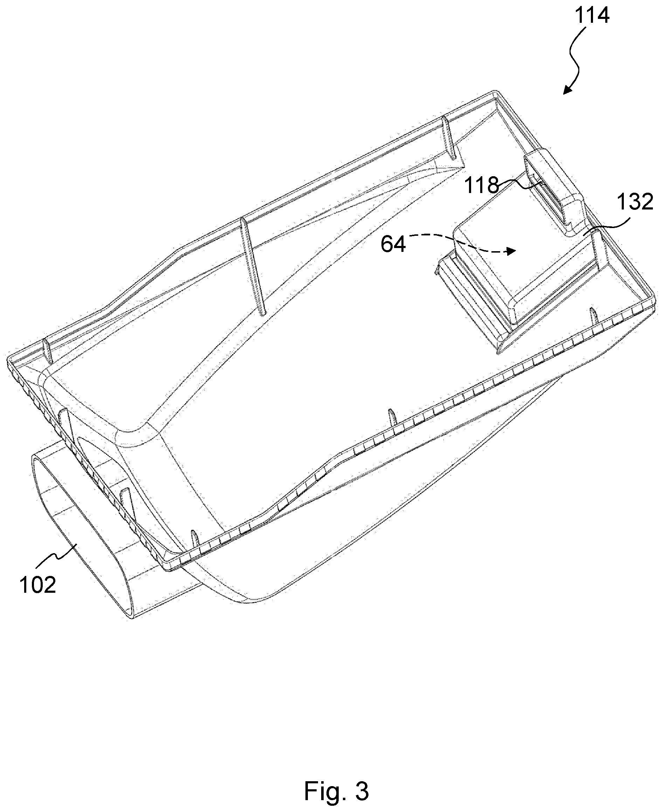

Das Filtersystem 100 weist ein Filtergehäuse 110 mit einem Gehäuseunterteil 114 und einem Gehäusedeckel 112 sowie ein in dem Filtergehäuse 110 zwischen einer Rohseite 50 und einer Reinseite 52 austauschbar angeordnetes Filterelement 10 zum Filtern eines Fluids auf. Das Filterelement 10 umfasst dabei einen, beispielsweise einstückigen, Filterbalg 12, mit einer ersten flächigen Anströmfläche 54 für einen ersten Fluidstrom 60, sowie einer zweiten Anströmfläche 56 für einen zweiten Fluidstrom 62 separat vom ersten Fluidstrom 60. Die Fluidströme 60, 62 sind durch Pfeile angedeutet. Der erste Fluidstrom 60 tritt durch den Einlass 102 des Gehäuseunterteils 114 in das Filtergehäuse 110 auf der Rohseite 50 ein und strömt dann durch über die erste Anströmfläche 54 durch den Filterbalg 12 auf die Reinseite 52. Der zweite Fluidstrom 62 tritt über das Ventil 116 in die Strömungskammer 132 (siehe Figur 3) in das Gehäuseunterteil 114 ein und entlang des Strömungskanals 130 und einen Strömungskanalabschnitt 64 durch das vorzugsweise durchströmbare Kompensationselement 48 über die zweite Anströmfläche 56 durch den Filterbalg 12. Beide Fluidströme 60, 62 treten durch den Auslass 104 wieder aus dem Filtergehäuse 110 aus. Die zweite Anströmfläche 56 ist von der ersten Anströmfläche 54 über das Trennelement 44 ausreichend fluiddicht getrennt. Rohseitig vor der zweiten Anströmfläche 56 ist dabei ein Kompensationselement 48 angeordnet, durch welches ein Strömungskanal 130 des zweiten Fluidstroms 62 von einem rohseitigen Eingang 106 zur zweiten Anströmfläche 56 geführt ist. Dabei ist das Kompensationselement 48 in dem Strömungskanalabschnitt 64 des zweiten Fluidstroms 62 stromauf der zweiten Anströmfläche 56 an einem Randsegment 30 des Filterelements 10 angeordnet. Der Strömungskanal 130 ist so von dem rohseitigen Einlass 106 zu der zweiten Anströmfläche 56 durch wenigstens einen Teil des Randsegments 30 geführt.

Das Filtergehäuse 110 weist einen ersten Einlass 102 zum Einströmen des ersten Fluidstroms 60 an die erste Anströmfläche 54 und einen zweiten Einlass 106 zum Einströmen des zweiten Fluidstroms 62 an die zweite Anströmfläche 56 auf.

Das Trennelement 44 ist parallel zu Falten 34 des Filterbalgs 12 angeordnet, wodurch sich ein möglichst geringer Strömungswiderstand durch das Trennelement 44 selbst ergibt. Das Trennelement 44 ist mit einem Deckelelement 46 zur flächigen Abdeckung der zweiten Anströmfläche 56 gegen den ersten Fluidstrom 60 fluiddicht verbunden. Dadurch sind das Trennelement 44, das Deckelelement 46, das Kompensationselement 48 und der Rahmen 28 als eine Kammer ausgebildet. Das Kompensationselement 48 schließt bei montiertem Filterelement 10 direkt mit der Stirnwand der Öffnung 118 ab.

Das Kompensationselement 48, das als Vlies ausgebildet sein kann, ist mit dem Filterbalg 12 und dem Rahmen 28 verbunden. Auf Grund seiner Elastizität dient das Kompensationselement 48 dabei als Toleranzausgleich bei der Montage des Filterelements 10 im Filtergehäuse 110. Gleichzeitig übernimmt das Kompensationselement 48 eine Abdichtfunktion gegenüber dem Strömungskanal 130.

Der Filterbalg 12 weist eine Anströmseite 66 und eine gegenüberliegende Abströmseite 68 auf, die im Bereich der zweiten Anströmfläche 56 einen gegenüber der ersten Anströmfläche 54 geringeren Abstand voneinander aufweisen, was bedeutet, dass der Filterbalg im Bereich der zweiten Anströmfläche 56 dünner ausgebildet ist.

Das Filterelement 10 mit dem Filterbalg 12 ist in diesem Beispiel als Flachfilter in Form eines Schubladenfilterelements ausgebildet. Dazu weist das Filtergehäuse 110 ein Einschubfach 146 mit einer Rahmenführung 158 für das Filterelement 10 auf, mittels derer das Filterelement 10 über eine Einschuböffnung 144 des Filtergehäuses 110 quer zur Durchströmungsrichtung 58 in das Einschubfach 146 einschiebbar ist, so dass eine Dichtung 40 des Filterelements 10 an einer Gehäusedichtfläche 160 umlaufend und in einer zur Hauptströmungsachse 128 des Fluids axialen Richtung dichtend anliegt. Die Durchströmungsrichtung 58 ist parallel zur Hauptströmungsachse 128. Die Durchströmungsrichtung 58 ist hier beispielsweise senkrecht zur Anströmfläche 54, 56 und Abströmseite 68 bzw. Abströmfläche gerichtet. Vorzugsweise bilden Abströmfläche und Anströmfläche bei einem Filterbalg 12 mit aufgestellten Falten 34 die Flächen, in denen jeweils die anströmseitigen und abströmseitigen Faltkanten 26 (Fig. 2) liegen.

Optional können auch andere Geometrien des Filterelements 10 statt eines Flachfilters vorgesehen sein, beispielsweise ein gestuftes Filterelement.

In einem Gehäuseunterteil 114 des Filtergehäuses 110 ist eine Strömungskammer 132 mit einem Ventil 116 für den zweiten Fluidstrom 62 ausgebildet. Das Ventil 116 ist an dem zweiten Einlass 106 angeordnet und kann beispielsweise als Rückschlagventil ausgebildet sein. Ein Zustrom des Fluids über das Ventil 116 kann dabei druckgesteuert oder durch einen Strömungswiderstand gesteuert erfolgen. Das Ventil 116 ist jedoch für die Funktion der zweiten Anströmfläche 56 als separaten Filtrationsbereich für einen Notbetrieb bei zugesetzter erster Anströmfläche 54 nicht unabdingbar nötig.

Figur 3 zeigt eine isometrische Darstellung des Gehäuseunterteils 114 des Filtersystems 100 nach Figur 1. Das Gehäuseunterteil 114 umfasst den Einlass 102 des Fluids in das Filtergehäuse und weist eine Strömungskammer 132 auf, welche den Strömungskanalabschnitt 64 darstellt, über den ein zweiter Fluidstrom 62 (siehe Figuren 1 und 2) über die Einströmöffnung 118 in den Strömungskanal 130 und damit durch das Kompensationselement 48 auf die zweite Anströmfläche 56 des Filterelements 10 gelangen kann.

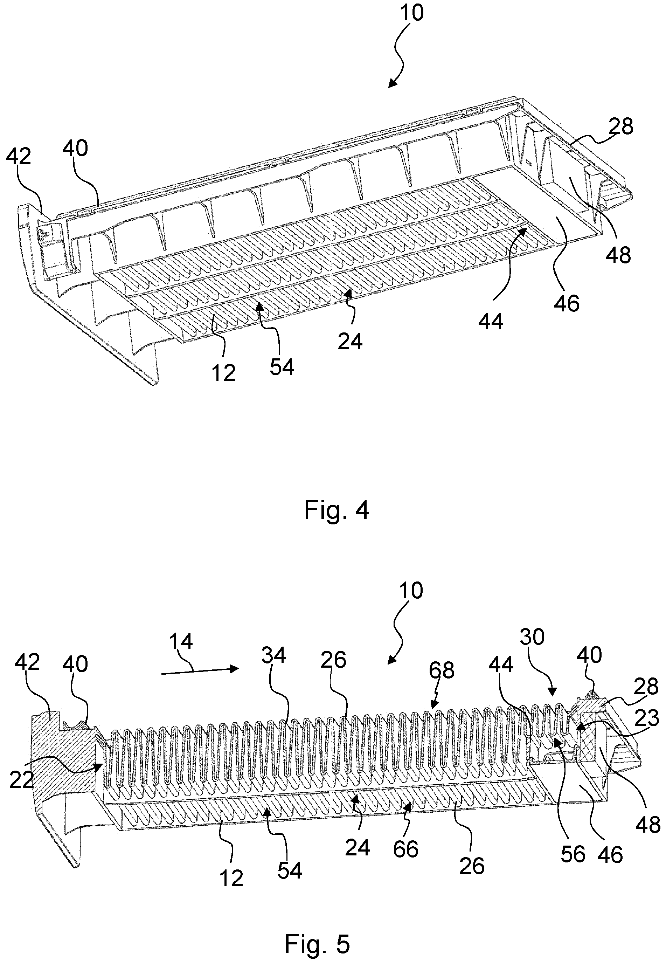

In Figur 4 ist eine isometrische Darstellung des Filterelements 10 aus dem Filtersystem 100 nach Figur 1 zu sehen, während Figur 5 eine geschnittene isometrische Darstellung des Filterelements 10 zeigt. Das Filterelement 10 ist als Flachfilter in Form eines Schubladenfilterelements ausgeführt und weist außer dem kunststoffumspritzten Filterbalg 12 an einem Ende ein Abschlusselement 42 auf, mit dem eine Einschuböffnung 144 im Filtergehäuse 110 verschlossen wird. Die Abdichtung zwischen Rohseite 50 und Reinseite 52 des Filtersystems erfolgt durch die auf dem Rahmen 28 angeordnete Dichtung 40, welche im montierten Zustand an der Gehäusedichtfläche 160 (Figur 2) dichtend anliegt.

Der Filterbalg 12 des Filterelements 10 ist zickzackförmig zu Falten 34 gefaltet, mit parallelen, in einer Längserstreckung 14 zwischen gegenüberliegenden Stirnkanten 22, 23 des Filterbalgs 12 aufeinander folgenden, jeweils anströmseitig und abströmseitig ausgebildeten Faltkanten 26. Der Filterbalg 12 ist umlaufend mit einem durchgehenden Rahmen 28 aus Kunststoff umspritzt.

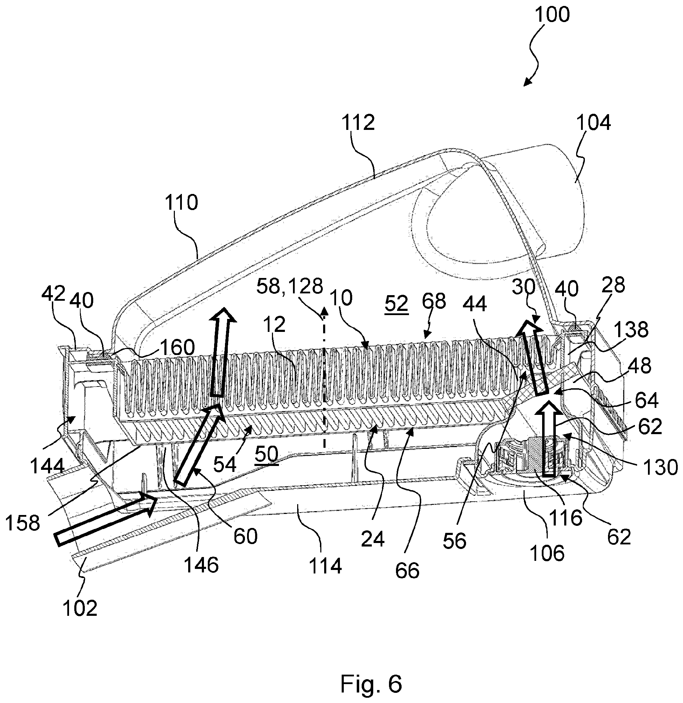

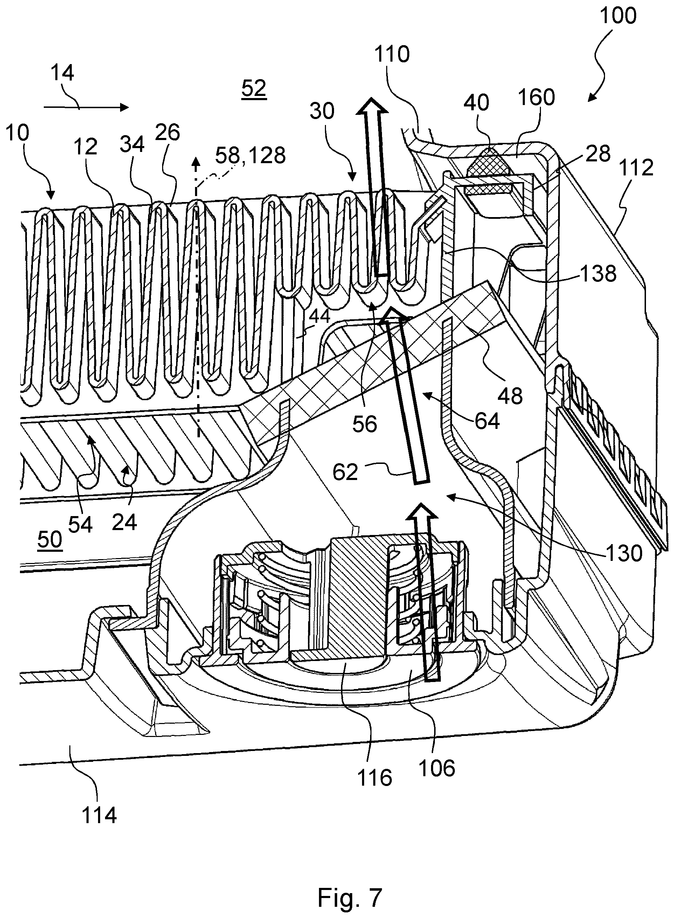

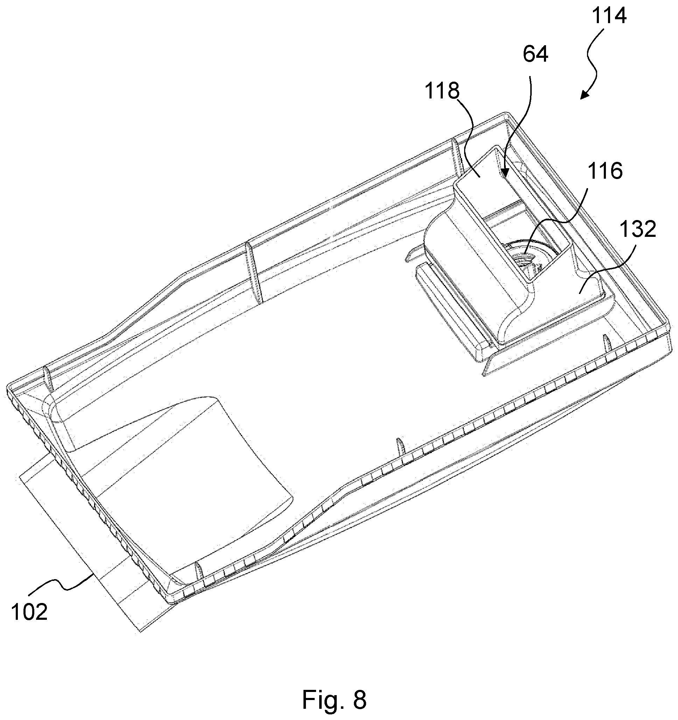

Figur 6 zeigt eine geschnittene isometrische Darstellung eines Filtersystems 100 mit montiertem Schubladenfilterelement 10 nach einem Ausführungsbeispiel der Erfindung mit einer Anströmung über eine Stirnfläche 24 des Filterelements 10, während in Figur 7 eine Detailansicht des Filtersystems 100 im Bereich der zweiten Anströmfläche 56 dargestellt ist. Dabei ist das Kompensationselement 48 an der Stirnfläche 24 des Filterelements 10 mit einer geringen Neigung zur Anströmseite 66 angeordnet. Der Strömungskanal 130 ist so von dem rohseitigen Einlass 106 zu der zweiten Anströmfläche 56 über wenigstens einen Teil einer Filterelement-Stirnfläche 24 geführt. Die Fluidströme 60, 62 sind wieder durch Pfeile angedeutet. Der erste Fluidstrom 60 tritt durch den Einlass 102 des Gehäuseunterteils 114 in das Filtergehäuse 110 auf der Rohseite 50 ein und strömt dann durch über die erste Anströmfläche 54 durch den Filterbalg 12 auf die Reinseite 52. Der zweite Fluidstrom 62 tritt über das Ventil 116 in die Strömungskammer 132 (siehe Figur 8) in das Gehäuseunterteil 114 ein und entlang des Strömungskanals 130 und den Strömungskanalabschnitt 64 durch das Kompensationselement 48 über die zweite Anströmfläche 56 durch den Filterbalg 12. Beide Fluidströme 60, 62 treten durch den Auslass 104 wieder aus dem Filtergehäuse 110 aus.

Die Ausführung des Filterelements 10 ist ähnlich dem in den Figuren 1 bis 5 dargestellten Ausführungsbeispiel mit einem zu den Falten 34 des Filterbalgs 12 parallelen Trennelement 44 ausgeführt, welches den ersten Anströmbereich 54 von dem zweiten Anströmbereich 56 trennt. Bei dem in den Figuren 6 bis 10 dargestellten Ausführungsbeispiel erfolgt jedoch die Anströmung der zweiten Anströmfläche 56 direkt von der Unterseite des Filterbalgs 12. Das Filterelement 10 weist deshalb in diesem Ausführungsbeispiel kein Deckelelement auf. Das Kompensationselement 48 ist zwischen einer Öffnung 118 im Gehäuseunterteil 114 auf der einen Seite und dem Trennelement 44 und dem Rahmen 28 auf der gegenüberliegenden Seite angeordnet. Das Kompensationselement 48 schließt bei montiertem Filterelement 10 direkt an die Öffnung 118 des Filtergehäuseunterteils 114 an (Figur 8). Das Ventil 116 dient zur Anströmung in den zweiten Strömungskanal 130.

Figur 8 zeigt eine isometrische Darstellung des Gehäuseunterteils 114 des Filtersystems 100 nach Figur 6. Das Gehäuseunterteil 114 unterscheidet sich bei diesem Ausführungsbeispiel von dem Ausführungsbeispiel der Figuren 1 bis 5 dadurch, dass die Einströmöffnung 118 der Strömungskammer 132 nach oben weist und der Strömungskanalabschnitt 64 direkt in der Strömungskammer 132 ausgebildet ist, da das Filterelement 10 über seine zweite Anströmfläche 56, wie in den Figuren 6 und 7 zu erkennen, direkt von unten angeströmt wird.

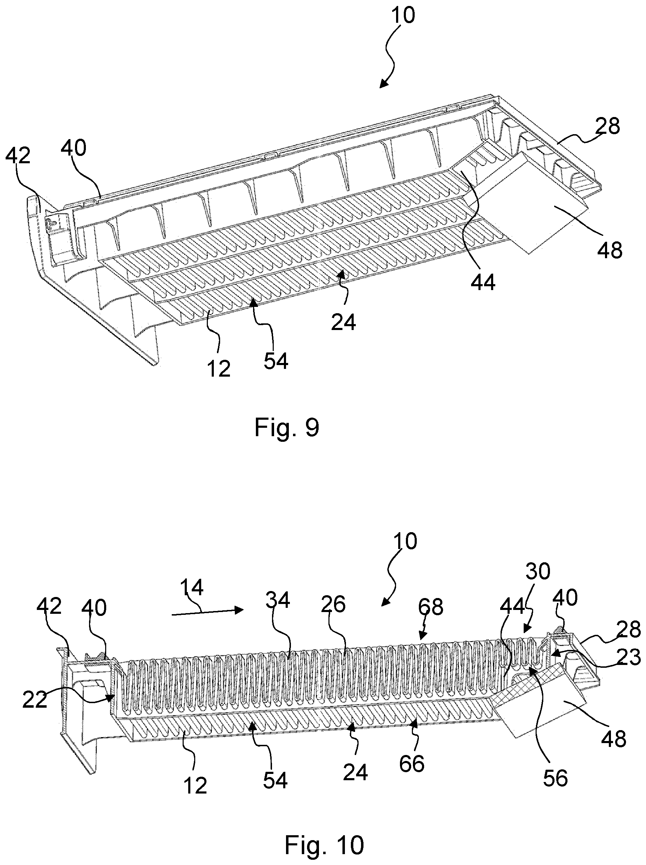

In Figur 9 ist eine isometrische Darstellung des Filterelements 10 aus dem Filtersystem 100 nach Figur 6 zu sehen, während in Figur 10 eine geschnittene isometrische Darstellung des Filterelements 10 dargestellt ist. Deutlich ist die schräge Anordnung des Kompensationselements 48 zwischen Trennelement 44 und Rahmen zu erkennen, welches mit dem Trennelement 44 und dem Rahmen 28 verbunden ist und beispielsweise angeklebt sein kann.

## Patentansprüche

1. Filterelement (10) zum Filtern eines Fluids, mit wenigstens einem Filterbalg (12), mit einer ersten flächigen Anströmfläche (54) für einen ersten Fluidstrom (60), sowie wenigstens einer zweiten Anströmfläche (56) für einen zweiten Fluidstrom (62) separat vom ersten Fluidstrom (60), und mit einem Rahmen (28), wobei im Filterbalg (12) wenigstens ein Trennelement (44) zwischen erster und zweiter Anströmfläche (54, 56) angeordnet ist, sodass die zweite Anströmfläche (56) von der ersten Anströmfläche (54) fluiddicht getrennt ist, wobei in einem Strömungskanalabschnitt (64) des zweiten Fluidstroms (62) rohseitig vor der zweiten Anströmfläche (56) wenigstens ein Kompensationselement (48) zum Ausgleich von Toleranzen im Filterelement (10) angeordnet ist, wobei das Kompensationselement (48) vom Fluid durchströmbar ausgebildet ist und wobei zumindest das Trennelement (44), das Kompensationselement (48) und der Rahmen (28) als eine Kammer ausgebildet sind.

2. Filterelement nach Anspruch 1, wobei das Kompensationselement (48) in oder an einem Randsegment (30) des Filterelements angeordnet ist.

3. Filterelement nach Anspruch 1, wobei das Kompensationselement (48) in oder an einer Stirnfläche (24) des Filterelements angeordnet ist.

4. Filterelement nach einem der vorhergehenden Ansprüche, wobei das Trennelement (44) mit einem Deckelelement (46) zur flächigen Abdeckung der zweiten Anströmfläche (56) gegen den ersten Fluidstrom (60) zumindest unter normalen Betriebsbedingungen ausreichend fluiddicht verbunden ist.

5. Filterelement nach Anspruch 4, wobei das Deckelelement (46) die Kammer mit bildet.

6. Filterelement nach einem der vorhergehenden Ansprüche, wobei der wenigstens eine Filterbalg (12) zickzackförmig zu Falten (34) gefaltet ist, mit parallelen, in einer Längserstreckung (14) zwischen gegenüberliegenden Stirnkanten (22, 23) des Filterbalgs (12) aufeinander folgenden Faltkanten (26), und wobei der wenigstens eine Filterbalg (12) umlaufend mit einem durchgehenden Rahmen (28) umspritzt ist.

7. Filterelement nach einem der vorhergehenden Ansprüche, wobei das Kompensationselement (48) mit dem Filterbalg (12) und/oder dem Rahmen (28) verbunden ist.

8. Filtersystem (100) zum Filtern eines Fluids mit einem Filtergehäuse (110) und einem in dem Filtergehäuse (110) zwischen einer Rohseite (50) und einer Reinseite (52) austauschbar angeordneten Filterelement (10) zum Filtern eines Fluids, nach einem der vorhergehenden Ansprüche, mit wenigstens einem Filterbalg (12), mit einer ersten flächigen Anströmfläche (54) für einen ersten Fluidstrom (60), sowie wenigstens einer zweiten Anströmfläche (56) für einen zweiten Fluidstrom (62) separat vom ersten Fluidstrom (60), wobei die zweite Anströmfläche (56) von der ersten Anströmfläche (54) fluiddicht getrennt ist, wobei rohseitig vor der zweiten Anströmfläche (56) wenigstens ein Kompensationselement (48) zum Ausgleich von Toleranzen im Filterelement (10) angeordnet ist, welches vom Fluid durchströmbar ausgebildet ist und durch welches ein Strömungskanal (130) des zweiten Fluidstroms (62) von einem rohseitigen Eingang (106) zur zweiten Anströmfläche (56) geführt ist,
wobei das Filtergehäuse (110) einen ersten Einlass (102) zum Einströmen des ersten Fluidstroms (60) an die erste Anströmfläche (54) und wenigstens einen zweiten Einlass (106) zum Einströmen des zweiten Fluidstroms (62) an die wenigstens zweite Anströmfläche (56) aufweist.

9. Filtersystem nach Anspruch 8, wobei der Strömungskanal (130) von dem rohseitigen Einlass (106) zu der zweiten Anströmfläche (56) über wenigstens einen Teil einer Filterelement-Stirnfläche (24) geführt ist und/oder wobei der Strömungskanal (130) von dem rohseitigen Einlass (106) zu der zweiten Anströmfläche (56) durch wenigstens einen Teil eines Randsegments (30) des Filterelements (10) geführt ist.

10. Filtersystem nach einem der Ansprüche 8 oder 9, wobei in einem Gehäuseunterteil (114) eine Strömungskammer (132) mit einem Ventil (116) für den zweiten Fluidstrom (62) ausgebildet ist.

11. Filtersystem nach einem der Ansprüche 8 bis 10, wobei an dem zweiten Einlass (106) ein Ventil (116) angeordnet ist.

12. Filtersystem nach einem der Ansprüche 8 bis 11, wobei das Filtergehäuse (110) ein Einschubfach (146) mit einer Rahmenführung (158) für das Filterelement (10) aufweist, mittels derer das Filterelement (10) über eine Einschuböffnung (144) des Filtergehäuses (110) in das Einschubfach (146) einschiebbar ist, so dass eine Dichtung (40) des Filterelements (10) an einer Gehäusedichtfläche (160) umlaufend und in einer zur Hauptströmungsachse (128) des Fluids axialen Richtung dichtend anliegt.

## Claims

1. A filter element (10) for filtering a fluid, with at least one filter bellows (12), with a first flat inflow surface (54) for a first fluid flow (60) as well as at least one second inflow surface (56) for a second fluid flow (62) separate from the first fluid flow (60), and with a frame (28), wherein at least one partition element (44) is disposed in the filter bellows (12) between the first and second inflow surfaces (54, 56) such that the second inflow surface (56) is fluid-tightly separated from the first inflow surface (54), wherein, in a flow duct section (64) of the second fluid flow (62) on the raw side upstream of the second inflow surface (56), at least one compensation element (48) is disposed to compensate for tolerances in the filter element (10), wherein the compensation element (48) is designed to allow fluid to flow through it, and wherein at least the partition element (44), the compensation element (48), and the frame (28) are designed as a chamber.

2. The filter element according to claim 1, wherein the compensation element (48) is disposed in or on an edge segment (30) of the filter element.

3. The filter element according to claim 1, wherein the compensation element (48) is disposed in or on an end face (24) of the filter element.

4. The filter element according to one of the preceding claims, wherein the partition element (44) is connected to a cover element (46) for flatly covering the second inflow surface (56) against the first fluid flow (60) such that it is sufficiently fluid-tight at least under normal operating conditions.

5. The filter element according to claim 4, wherein the cover element (46) forms part of the chamber.

6. The filter element according to one of the preceding claims, wherein the at least one filter bellows (12) is folded in a zigzag shape to form folds (34), with successive fold edges (26) extending in a longitudinal extension (14) between opposing front edges (22, 23) of the filter bellows (12), and wherein the at least one filter bellows (12) is circumferentially overmolded with a continuous frame (28).

7. The filter element according to one of the preceding claims, wherein the compensation element (48) is connected to the filter bellows (12) and/or the frame (28).

8. A filter system (100) for filtering a fluid, with a filter housing (110) and a filter element (10) replaceably disposed in the filter housing (110) between a raw side (50) and a clean side (52) for filtering a fluid, according to one of the preceding claims, with at least one filter bellows (12), with a first flat inflow surface (54) for a first fluid flow (60), as well as at least a second inflow surface (56) for a second fluid flow (62) separate from the first fluid flow (60), wherein the second inflow surface (56) is fluid-tightly separated from the first inflow surface (54), wherein at least one compensation element (48) for compensating for tolerances in the filter element (10) is disposed on the raw side in front of the second inflow surface (56), which filter element is designed to allow fluid to flow through it and through which a flow duct (130) of the second fluid flow (62) is guided from a raw-side inlet (106) to the second inflow surface (56),
wherein the filter housing (110) features a first inlet (102) for the inflow of the first fluid flow (60) to the first inflow surface (54) and at least one second inlet (106) for the inflow of the second fluid flow (62) to the at least one second inflow surface (56).

9. The filter system according to claim 8, wherein the flow duct (130) is led from the raw-side inlet (106) to the second inflow surface (56) across at least one part of a filter element end face (24) and/or wherein the flow duct (130) is led from the raw-side inlet (106) to the second inflow surface (56) through at least one part of an edge segment (30) of the filter element (10).

10. The filter system according to one of the claims 8 or 9, wherein a flow chamber (132) with a valve (116) for the second fluid flow (62) is designed in a housing lower part (114).

11. The filter system according to one of the claims 8 to 10, wherein a valve (116) is disposed at the second inlet (106).

12. The filter system according to one of the claims 8 to 11, wherein the filter housing (110) features an insertion compartment (146) with a frame guide (158) for the filter element (10), by means of which the filter element (10) can be inserted into the insertion compartment (146) of the filter housing (110) via an insertion opening (144), such that a seal (40) of the filter element (10) bears sealingly against a housing sealing surface (160) circumferentially and in a direction axial to the main flow axis (128) of the fluid.

## Revendications

1. Élément de filtre (10) destiné à filtrer un fluide, avec au moins un soufflet de filtre (12), avec une première surface d'afflux plane (54) pour un premier écoulement de fluide (60), ainsi qu'au moins une seconde surface d'afflux (56) pour un second écoulement de fluide (62) séparé du premier écoulement de fluide (60), et avec un cadre (28), dans lequel au moins un élément de séparation (44) est disposé dans le soufflet de filtre (12) entre la première et la seconde surface d'afflux (54, 56), de sorte que la seconde surface d'afflux (56) est séparée de la première surface d'afflux (54) de manière étanche aux fluides, dans lequel au moins un élément de compensation (48) est disposé dans une section de canal d'écoulement (64) du second écoulement de fluide (62), côté brut, en amont de la seconde surface d'afflux (56), pour compenser les tolérances dans l'élément de filtre (10), dans lequel l'élément de compensation (48) est conçu pour être traversé par le fluide et dans lequel au moins l'élément de séparation (44), l'élément de compensation (48) et le cadre (28) sont conçus comme une chambre.

2. Élément de filtre selon la revendication 1, dans lequel l'élément de compensation (48) est disposé dans ou sur un segment de bord (30) de l'élément de filtre.

3. Élément de filtre selon la revendication 1, dans lequel l'élément de compensation (48) est disposé dans ou sur une face d'extrémité (24) de l'élément de filtre.

4. Élément de filtre selon l'une quelconque des revendications précédentes, dans lequel l'élément de séparation (44) est relié de manière suffisamment étanche aux fluides à un élément de couvercle (46) destiné à recouvrir de manière plane la seconde surface d'afflux (56) contre le premier écoulement de fluide (60), au moins dans des conditions de fonctionnement normales.

5. Élément de filtre selon la revendication 4, dans lequel l'élément de couvercle (46) contribue à former la chambre.

6. Élément de filtre selon l'une quelconque des revendications précédentes, dans lequel le soufflet de filtre (12), au moins au nombre d'un, est plié en accordéon pour former des plis (34), avec des arêtes de pliage (26) parallèles s'étendant longitudinalement (14) entre des arêtes frontales opposées (22, 23)du soufflet de filtre (12), et dans lequel le soufflet de filtre (12), au moins au nombre d'un, est surmoulé sur son pourtour par un cadre continu (28).

7. Élément de filtre selon l'une quelconque des revendications précédentes, dans lequel l'élément de compensation (48) est relié au soufflet de filtre (12) et/ou au cadre (28).

8. Système de filtre (100) destiné à filtrer un fluide, avec un boîtier de filtre (110) et un élément de filtre (10) disposé de manière interchangeable dans le boîtier de filtre (110) entre un côté brut (50) et un côté pur (52) pour filtrer un fluide, selon l'une quelconque des revendications précédentes, avec au moins un soufflet de filtre (12), avec une première surface d'afflux plane (54) pour un premier écoulement de fluide (60), ainsi qu'au moins une seconde surface d'afflux (56) pour un second écoulement de fluide (62) séparé du premier écoulement de fluide (60), dans lequel la seconde surface d'afflux (56) est séparée de la première surface d'afflux (54) de manière étanche aux fluides, dans lequel au moins un élément de compensation (48) est disposé côté brut en amont de la seconde surface d'afflux (56) pour compenser les tolérances dans l'élément de filtre (10), lequel est conçu pour être traversé par le fluide et à travers lequel un canal d'écoulement (130) du second écoulement de fluide (62) est guidé depuis une entrée côté brut (106) vers la seconde surface d'afflux (56),
dans lequel le boîtier de filtre (110) présente une première entrée (102) pour l'admission du premier écoulement de fluide (60) vers la première surface d'afflux (54) et au moins la seconde entrée (106) pour l'admission du second écoulement de fluide (62) vers la seconde surface d'afflux (56), au moins au nombre d'une.

9. Système de filtre selon la revendication 8, dans lequel le canal d'écoulement (130) est guidé de l'entrée côté brut (106) à la seconde surface d'afflux (56) par au moins une partie d'une face d'extrémité de l'élément de filtre (24), et/ou dans lequel le canal d'écoulement (130) est guidé de l'entrée côté brut (106) à la seconde surface d'afflux (56) à travers au moins une partie d'un segment de bord (30) de l'élément de filtre (10).

10. Système de filtre selon l'une quelconque des revendications 8 ou 9, dans lequel une chambre d'écoulement (132) avec une vanne (116) pour le second écoulement de fluide (62) est formée dans une partie inférieure de boîtier (114).

11. Système de filtre selon l'une quelconque des revendications 8 à 10, dans lequel une vanne (116) est disposée au niveau de la seconde entrée (106).

12. Système de filtre selon l'une quelconque des revendications 8 à 11, dans lequel le boîtier de filtre (110) présente un compartiment d'insertion (146) muni d'un guide de cadre (158) pour l'élément de filtre (10), au moyen duquel l'élément de filtre (10) peut être inséré dans le compartiment d'insertion (146) du boîtier de filtre (110) au moyen d'un orifice d'insertion (144), de sorte qu'un joint d'étanchéité (40) de l'élément de filtre (10) s'appuie de manière étanche sur une surface d'étanchéité de boîtier (160) sur son pourtour et dans une direction axiale par rapport à l'axe d'écoulement principal (128) du fluide.
